# EUROPÄISCHE PATENTSCHRIFT

(11) **EP 3 864 069 B1**
(45) Veröffentlichungstag und Bekanntmachung des Hinweises auf die Patenterteilung: **03.01.2024**
(21) Anmeldenummer: 19783268.6
(22) Anmeldetag: 02.10.2019
(51) Int. Cl.: C08G 67/02, C08L 73/00

(54) **POLYKETONCOMPOUND**
POLYKETONE COMPOUND
COMPOSÉ POLYCÉTONE

(30) Priorität: 10.10.2018 DE 102018125067
(43) Veröffentlichungstag der Anmeldung: 18.08.2021
(60) Teilanmeldung: 23211383.7
(73) Patentinhaber: Carl Freudenberg KG, 69469 Weinheim (DE)
(72) Erfinder: HELLBACH, Bjoern, 69488 Birkenau (DE); SUTTER, Marco, 69469 Weinheim (DE); FIETZ, Roland, 35279 Neustadt-Momberg (DE); SCHAUBER, Thomas, 69469 Weinheim (DE)
(86) Internationale Anmeldenummer: PCT/EP2019/076716
(87) Internationale Veröffentlichungsnummer: WO 2020/074349

(56) Entgegenhaltungen:
- CN-A- 107 739 501
- JP-A- H 101 604
- BUDINSKI ET AL: "ENGINEERING.MATERIALS- PROPERTIES AND SELECTION - 8th edition", 1. Januar 2005 (2005-01-01), 20050101, PAGE(S) 137 - 182, XP008136638, Seite 163

## Beschreibung

Die Erfindung betrifft ein Polyketoncompound auf Basis von aliphatischen Polyketonen, insbesondere ein Polyketoncompound mit verbesserten tribologischen Eigenschaften. Die Erfindung betrifft ferner ein Verfahren zur Herstellung des Polyketoncompounds, seine Verwendung zur Herstellung von Formkörpern, insbesondere Dichtungen, sowie Formkörper, die das Polyketoncompound enthalten.

### Stand der Technik

Aliphatische Polyketone sind linear aufgebaute Polymere, die aus Kohlenmonoxid und α-Olefinen hergestellt werden, wobei die Anordnung der monomeren Einheiten in der polymeren Kette streng alternierend erfolgt.

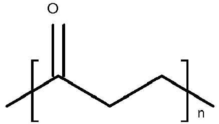

Erstmalige Erwähnung fand diese Polymerklasse in den Arbeiten von *Walter Reppe* aus dem Jahr 1940 und den Arbeiten von *Merlin M. Brubaker,* der sich in den fünfziger Jahren des zwanzigsten Jahrhunderts bei DuPont mit der Interpolymerisation von Kohlenmonoxid in ungesättigte Substanzen wie beispielsweise aliphatische Monoolefine und fluorierte Ethylene beschäftigte (u.a. US 2,495,286). Die großtechnische Synthese der aliphatischen Polyketone wurde von Mitarbeitern der Shell Oil Company unter Leitung von *Eit Drent* in den letzten drei Dekaden des zwanzigsten Jahrhunderts entwickelt, optimiert und patentiert (u.a. US 3,689,460; US 4,818,810; US 4,921937). Die Polymerisation kann dabei entweder in methanolischer Suspension oder via Gasphasenreaktion mit immobilisierten Katalysatoren erfolgen (u.a. Drent, E.; Mul, W. P.; Smaardijk, A. A. (2001); "Polyketones"; Encyclopedia Of Polymer Science and Technology und Bianchini, C. (2002); "Alternating copolymerization of carbon monoxide and olefins by single-site metal catalysts"; Coord. Chem. Rev. 225: 35-66). Als Katalysatoren oder deren Vorstufen werden hauptsächlich Palladium(II)-Komplexe eingesetzt (u.a. US 3,689,460; US 3,694,412; US 4,818,810; Sen, A.; Lai, T. W. (1982); "Novel palladium(II)-catalyzed copolymerization of carbon monoxide with olefins"; J. Am. Chem. Soc. 104 (12): 3520-3522; Drent, E.; Budzelaar, P. H. M. (1996); "Palladium-Catalyzed Alternating Copolymerization of Alkenes and Carbon Monoxide"; Chem. Rev. 96 (2): 663-682). Der Mechanismus für die Palladiumkatalyse in methanolischer Suspension wurde von *Maurice Brookhart* (Rix, F. C.; Brookhart, M.; White, P. S. (1996) "Mechanistic Studies of the Palladium(II)-Catalyzed Copolymerisation of Ethylene with Carbon Monoxide"; J. Am. Chem. Soc. 118 (20): 4746-4764) am Beispiel eines Palladium(II)phenanthrolin-Katalysators untersucht.

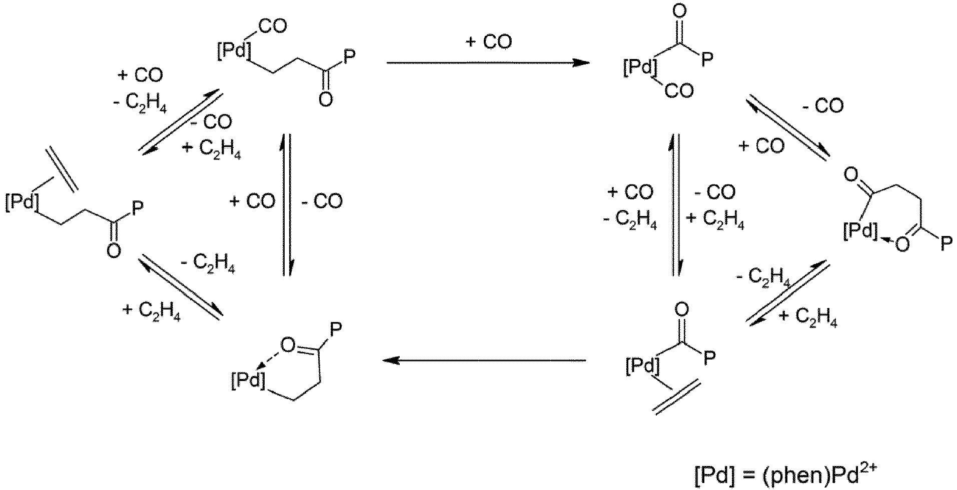

Ab 1996 waren aliphatische Polyketone erstmals kommerziell und in größeren Mengen von Shell unter dem Handelsnamen Carilon^{®} erhältlich. 2003 begann die Firma Hyosung in Südkorea mit Forschungen an aliphatischen Polyketonen (u.a US 7,803,897). Seit 2015 produziert Hyosung aliphatische Polyketone unter dem Handelsnamen POKETON^{®} auf einer semi-kontinuierlichen Anlage mit einer jährlichen Kapazität von 50.000 Jahrestonnen.

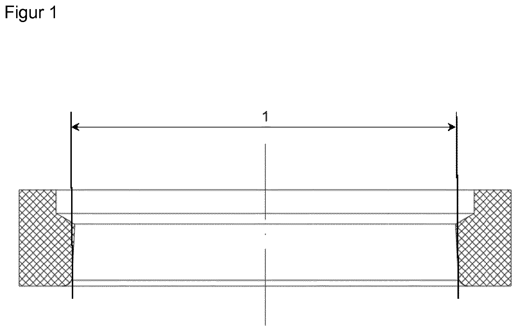

Hyosung produziert heutzutage nahezu ausschließlich Polyketon-Terpolymere anstatt der klassischen Polyketon-Copolymere (Abbildung 1), die nur aus Kohlenmonoxid und Ethylen hergestellt werden. Diese Polyketon-Terpolymere werden aus Kohlenmonoxid, Ethylen und bevorzugt geringen Mengen Propylen hergestellt.

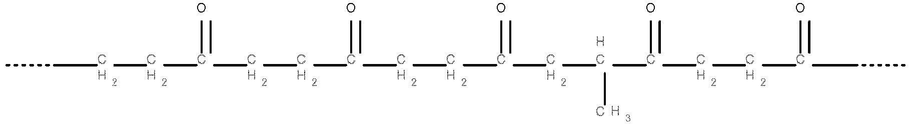

CN107739501A offenbart eine Polyketonzusammensetzung, die ein aliphatisches Polyketon, einen polymeren Schlagzähigkeitsverbesserer, einen Hitzestabilisator, ein Gleitmittel, einen Phasenvermittler, Hilfsadditive und ein Antiverschleißmittel umfasst. In einigen Fällen werden auch längerkettige α-Olefine wie z.B. 1-Butylen als Termonomer eingesetzt.

Der Grund für die Verwendung von Ter- anstatt von Copolymeren liegt in der deutlich reduzierten Sprödigkeit der Terpolymere. Aufgrund ihrer streng alternierend aufgebauten Polymerkette mit extrem niedriger Fehlstellenrate (eine Fehlstelle pro einer Millionen monomerer Einheiten; siehe Rix, F. C.; Brookhart, M.; White, P. S. (1996) "Mechanistic Studies of the Palladium(II)-Catalyzed Copolymerisation of Ethylene with Carbon Monoxide"; J. Am. Chem. Soc. 118 (20): 4746-4764) sowie der hohen Anzahl an polaren Ketogruppen sind Polyketon-Copolymere, bestehend aus Kohlenmonoxid und Ethylen, hochkristallin, sehr hart aber auch sehr spröde, was ihre Anwendungsmöglichkeiten als polymerer Werkstoff deutlich einschränkt. Durch die Zugabe von geringen Mengen an Propylen (etwa 5 %) während der Synthese ist es gelungen die Kristallinität so zu stören, dass sich der Schmelzpunkt von 255 °C (Copolymer aus Kohlenmonoxid und Ethylen) auf 220 °C (Terpolymer) erniedrigt und man ein extrem zähes anstatt sprödes Polymer erhält.

Aliphatische Polyketon-Terpolymere besitzen einen Kristallinitätsgrad von etwa 30 % und zeichnen sich durch gute mechanische Eigenschaften aus, die im Gegensatz zu beispielsweise Polyamiden durch Feuchtigkeit weitestgehend nicht beeinflusst werden. Der Zug-E-Modul von unmodifizierten Polyketonen liegt nach ISO 527-1/2 bei etwa 1400 bis 1500 MPa. Ihre Streckdehnung liegt nach ISO 527-1/2 bei etwa 25 % und sie können im Vergleich mit anderen technischen Kunststoffen einer größeren Anzahl an Deformationszyklen bis zur Streckgrenze ohne plastische Verformung widerstehen. Weiterhin zeigen sie ein duktiles Verhalten über einen breiten Temperaturbereich, wobei Bruchdehnungen von über 300 % erreicht werden können. Die Schlagzähigkeit nach Charpy für ein ungefülltes, unmodifiziertes Polyketon-Terpolymer gemäß der Norm ISO 179-1/1 eU ist so hoch, dass sowohl bei 23 °C als auch bei -30 °C kein Bruch erfolgt. Die Kerbschlagzähigkeit nach Charpy gemäß der Norm ISO 179-1/1eA liegt je nach Polymerkettenlänge zwischen 10 und 15 KJ/m² bei einer Temperatur von 23 °C und zwischen 3,5 und 4,5 KJ/m² bei einer Temperatur von -30 °C.

Weiterhin verfügen aliphatische Polyketone über eine exzellente Chemikalienbeständigkeit, insbesondere gegen apolare Lösungsmittel wie beispielsweise aliphatischen oder aromatischen Kohlenwasserstoffen. Auch gegenüber Wasser oder verdünnten Basen und Säuren besitzen aliphatische Polyketone eine sehr gute Beständigkeit. Lagerungstests in Wasser bei 80 °C über einen Zeitraum von 25 Tagen ergaben beispielsweise nur eine Gewichtszunahme von 2,5 Gew.% und eine Erhöhung der Streckspannung von 1,3 MPa. Auch die Lagerungen in 1%iger Salzsäure bzw. 1%iger Natriumhydroxidlösung bei 80 °C über einen Zeitraum von 25 Tagen erbrachten keine Verschlechterung der mechanischen Kennwerte. Lediglich starke Säuren oder Basen können über die Zeit zu einem Abbau von aliphatischen Polyketonen führen.

Die aliphatischen Polyketone von Hyosung werden von verschiedenen Compoundeuren weiter veredelt und sind unter diversen Handelsnamen, wie z.B. AKROTEK^{®} PK (Fa. AKRO-PLASTIC GmbH), Schulaketon^{®} (Fa. A. Schulman GmbH), WITCOM PK (Fa. Witcom Engineering Plastics B.V.) oder SUSTAKON^{®} (Fa. Röchling Sustaplast SE & Co. KG) kommerziell erhältlich. Durch das Compoundieren mit bestimmten Additiven können ausgewählte Eigenschaften der aliphatischen Polyketone weiter verbessert oder verändert werden. Beispielhaft können hier die Versteifung des Polymers mit Glasfaserkurzschnitt (z.B. in den kommerziellen Produkten AKROTEK^{®} PK-VM GF15, AKROTEK^{®} PK-VM GF30, AKROTEK^{®} PK-VM GF50, Schulaketon^{®} GF15, Schulaketon^{®} GF30, Ketoprix^{™} EKT33G2P, Ketoprix^{™} EKT33G2P, etc.) oder Carbonfaserkurzschnitt (z.B. in den kommerziellen Produkten AKROTEK^{®} PK-HM CF12 schwarz, TECACOMP^{®} PK TRM CF20 black, etc.) sowie eine flammhemmende Ausrüstung (z.B. in den kommerziellen Produkten AKROTEK^{®} PK-VM GF20 FR schwarz, Schulaketon^{®} HV 4DE, etc.) genannt werden.

Die tribologischen Eigenschaften aliphatischer Polyketone sind ebenfalls gut, was sie u.a. für Dichtungsanwendungen interessant macht. So haben Versuche der Fachhochschule Lübeck auf einem Universaltribometer (Stift-Platte, Platte: 100Cr6, Belastung: 2,5 MPa, Hub: 1,8 mm, Rₐ = 0,42, Gleitbewegung: 46 Hz) beispielsweise gezeigt, dass aliphatische Polyketone mit einem MVR von 60 g/10 min über einen Reibwert von 0,33 und eine spezifische Verschleißrate von 0,8 *10⁶ mm³/Nm verfügen. Um den hohen Anforderungen an die tribologischen Eigenschaften, wie sie beispielsweise für bestimmte Dichtungen notwendig sind, gerecht werden zu können, müssen jedoch oft zusätzlich tribologische Additive verwendet werden. Diese Additive bilden dann in der Anwendung einen Trennfilm zwischen den Oberflächen von Polymer und Gegenlauffläche, welcher in der Lage ist, erheblichen Krafteinwirkungen bei rollendem oder gleitendem Kontakt über einen längeren Zeitraum standzuhalten. In kommerziellen Produkten finden sich hierbei nahezu ausschließlich PTFE-Pulver oder PTFE-Pulver/Silikonöl-Kombinationen: z.B. in AKROTEK^{®} PK-VM TM, AKROTEK^{®} PK-HM TM, TECACOMP^{®} PK TRM TF10, Witcom PK/3L1 und Witcom PK-3L3.

Ein weiterer großer Vorteil von aliphatischen Polyketonen (sowohl Co- als auch Terpolymere) ist, dass sie sich thermoplastisch verarbeiten lassen.

Vor dem Hintergrund wäre es wünschenswert aliphatische Polyketone für Dichtungen einzusetzen, da sie trotz ihrer Härte noch über eine gewisse Elastizität verfügen und einen hohen Extrusionswiderstand sowie gute tribologische Eigenschaften besitzen. Besonders interessant wären sie für rotationssymmetrische Elemente wie z.B. Stangendichtungen, Kolbendichtungen und Abstreifer und dabei insbesondere als möglicher Ersatz für Stangen- und Kolbendichtungen aus PTFE, PTFE-Bronze und PTFE-Glasfasern, da sich letztere, wie unten näher erläutert, nicht im Spritzgussverfahren darstellen lassen. Hier würde eine Materialumstellung von PTFE, PTFE-Bronze oder PTFE-Glasfasern auf ein spritzgussfähiges aliphatisches Polyketon einen großen Vorteil in puncto Herstellungsverfahren, - zeit und -kosten bedeuten. Stangendichtungen werden primär in Pneumatik- und Hydraulikzylindern eingesetzt und haben die Aufgabe, die ein- und ausfahrende Zylinderstange abzudichten. Ziel ist es, das unter Druck stehende Betriebsmedium am Austritt aus dem Zylinder zu hindern. Gleichzeitig muss dieses gegen Verunreinigungen von außen geschützt werden (Abstreifer). Kolbendichtungen haben hingegen die Aufgabe, den Kolben gegen das Zylinderrohr abzudichten und seine Bewegung effizient und mit minimaler Reibung sicherzustellen.

Derzeit werden sowohl Stangen- als auch Kolbendichtungen häufig aus PTFE, PTFE-Bronze-Compounds oder PTFE-Glasfaser-Compounds hergestellt, da diese Materialien eine geringe Reibung erzeugen und einen Stick-Slip-freien Lauf ermöglichen. Wegen ihres verhältnismäßig hohen E-Moduls können PTFE-Dichtungen aber nicht mehr als Ganzes zwischen Stangen- oder Kolbenoberfläche und Nutgrund radial verpresst werden. Vielmehr muss ihre Anpressung zunächst durch Aufweitung der Dichtung erzeugt und dann zusätzlich durch eine Elastomerdichtung, in der Regel einen O-Ring, verstärkt werden. Der O-Ring, oft als Spannring, Anpresselement oder Energizer bezeichnet, wirkt zusätzlich als Nebenabdichtung. Da ein PTFE-Dichtring einen großen Extrusionswiderstand hat, kann er auch bei hohem Druck ohne Stützring eingesetzt werden.

Obwohl ein Thermoplast, können PTFE und modifiziertes PTFE aufgrund des überaus hohen Molekulargewichtes und der hohen Schmelzviskosität nicht wie andere Thermoplaste aus der Schmelze, sondern nur mittels verschiedener Press- und Sintertechniken verarbeitet werden. Dichtungen aus PTFE oder PTFE-Compounds werden daher aufwendig nach dem folgenden Verfahren hergestellt. Das pulverförmige Polymer wird bei Raumtemperatur zu einem Vorformling, auch "Grünling" genannt, verpresst. Hierbei wird die lockere Pulverschüttung verdichtet und mit einem bestimmten Pressdruck kompaktiert. Der maximale Pressdruck richtet sich nach der Beschaffenheit des Pulvers und kann in einem Bereich von 150 bar für z.B. nicht-rieselfähige S-PTFE-Type bis zu 800 bar für PTFE-Compounds liegen. Der Pressvorgang erfolgt üblicherweise langsam, gleichmäßig und ohne Unterbrechungen. Nach Erreichen des maximalen Druckes muss dieser für eine bestimmte Zeit gehalten werden (Druckhaltezeit), um ein Partikelfließen zu ermöglichen und um interne Spannungsspitzen oder Unregelmäßigkeiten abzubauen. Nach einer langsamen Entspannung wird der Presslink idealerweise für eine bestimmte Zeit spannungsfrei gelagert, um weitere Entlüftung bzw. Spannungsausgleich zu ermöglichen. Nach dem Pressen werden die Presslinge einem definierten Sinterzyklus ausgesetzt. Hierbei erfolgt ein definiertes und dem Pressling angepasstes Aufheizen und letztendlich eine zeitgesteuerte Sinterung bei einer maximalen Temperatur von 370 bis 380 °C in einem geregelten Sinterofen. Nach Überschreiten des Kristallisationsschmelzpunktes bei etwa 342 °C geht das PTFE in den amorphen Zustand über und die zuvor kompaktierten Pulverteilchen sintern dabei zu einem homogenen Gefüge zusammen. Insbesondere bei größeren Pressteilen empfiehlt sich ein langsames Durchlaufen des Schmelztemperaturbereiches, da hier eine überproportionale Volumenzunahme des Materials erfolgt und u.U. große Spannungen auftreten können. Trotz Erreichen bzw. Überschreiten des Schmelz-/Gelpunktes erfolgt das Sintern der Pressteile sog. "formfrei", da aufgrund des hohen Molekulargewichtes die Gelstabilität von PTFE sehr hoch ist.

Aus der vorangehenden Beschreibung zur Herstellung von Dichtungen aus PTFE oder PTFE-Compounds wie z.B. PTFE-Bronze ist ersichtlich, dass der Fertigungsaufwand sehr hoch und mit hohen Kosten verbunden ist.

Es wäre mithin von großem Vorteil, wenn man für rotationssymmetrische Dichtungen, insbesondere für Stangen- und Kolbendichtungen, aliphatische Polyketone einsetzen könnte, da diese hervorragende mechanische Eigenschaften aufweisen und sich - im Unterschied zu den üblicherweise verwendeten PTFE oder PTFE-Compounds - im Spritzgussverfahren verarbeiten lassen.

In praktischen Versuchen hat sich jedoch gezeigt, dass dies nicht so leicht möglich ist. Ein wesentliches Kriterium von rotationssymmetrischen Dichtungen ist nämlich ihre Bindenahtfestigkeit, wie im Folgenden dargelegt. Aus aliphatischen Polyketon/PTFE-Compounds hergestellte Stangen- und Kolbendichtungen verfügen zwar über vergleichbare tribologische Eigenschaften und ergeben vergleichbare Leckage-Werte wie Stangen- und Kolbendichtungen aus PTFE, PTFE-Bronze oder PTFE-Glasfaser, aber aufgrund einer schlechten Bindenahtfestigkeit sind sie nicht für die Anwendung als Stangen- oder Kolbendichtungen oder ähnliche rotationssymmetrische Dichtungen geeignet.

Rotationssymmetrische Dichtungen werden bei Verwendung von thermoplastischen Materialien typischerweise mittels des Kunststoff-SpritzgussVerfahrens hergestellt. Um die Füllung solcher rotationssymmetrischen Kavitäten zu erreichen gibt es mehrere Möglichkeiten, z.B. A) Ringangüsse oder Schirm-Angüsse, B) Punkt- oder Tunnel-Anschnitte oder C) Heißkanalsysteme.

Schirm-Angüsse oder Ringangüsse (A) haben den Nachteil, dass die Angussgeometrien vom eigentlichen ringförmigen Produkt durch nachgeschaltete Arbeitsgänge abgetrennt werden müssen, was entsprechende Kosten verursacht. Daher werden diese Angussvarianten für eine rationelle Fertigung meist nur in Ausnahmefällen eingesetzt.

Als modernere und kostengünstigere Herstellvariante hat sich der Punkt- oder Tunnel-Anschnitt (B) (Anschnitt = Anguss) etabliert. Hier wird in der Regel über einen einzigen Anspritzpunkt dem Kunststoff der Eintritt in die Kavität ermöglicht. Derart hergestellte Produkte benötigen in der Regel keine Nacharbeit, da das Produkt von den Angussgeometrien bereits beim Auswerfen aus der Spritzgussmaschine getrennt wird (fertig fallend). Der Anguss schert sich sozusagen selbst ab.

Solche seitlich angespritzten Produkte besitzen jedoch meist auf der gegenüberliegenden Seite der Anspritzstelle eine sog. Zusammenfluss-Stelle (Bindenaht), also eine Stelle an der die Schmelzfronten zusammenfließen. Diese Bindenaht kann eine Schwachstelle darstellen und im Kunststoffprodukt zu einer Sollbruchstelle führen. Wie gut das Produkt an der Bindenaht zusammenhält wird von Faktoren wie beispielsweise Einspritzdruck, Schmelze- und Werkzeugtemperatur, aber auch durch die Materialauswahl und den Einfluss von Additivzusätzen bestimmt.

In praktischen Versuchen wurde gefunden, dass die kommerziell erhältlichen, PTFE-gefüllten Polyketoncompounds wie z.B. AKROTEK^{®} PK-VM TM, TECACOMP^{®} PK TRM TF10, Witcom PK/3L1 und Witcom PK-3L3 bei spritzgegossenen Dichtungen zu einer deutlich reduzierten Bindenahtfestigkeit führen, so dass die Bauteile bereits bei geringer Krafteinwirkung an der Bindenaht brechen und sich daher für das Punkt- oder Tunnel-Anschnittverfahren weniger eignen. In Anwendungsversuchen zeigte sich ferner, dass Stangendichtungen, die aus PTFE-gefüllten Polyketoncompounds wie z.B. AKROTEK^{®} PK-VM TM spritzgegossen wurden, beim Einbau in den Zylinder an der Bindenaht brechen, da man die steifen Dichtungen mittels einer Montagezange stark verformen muss.

Bei Stangendichtungen, die aus kommerziellen Tribo-PK-Compounds hergestellt wurden, kommt es bei dieser Deformation zu Brüchen an der Bindenaht.

### Darstellung der Erfindung

Der Erfindung liegt daher die Aufgabe zu Grunde, ein Polyketoncompound bereitzustellen, das sich im Spritzguss verarbeiten lässt und sich durch eine hohe Bindenahtfestigkeit auszeichnet. Darüber hinaus soll das Polyketoncompound die für Dichtungsanwendungen notwendigen guten tribologischen Eigenschaften und einen hohen Extrusionswiderstand zeigen. Diese Aufgabe wird gelöst durch ein aliphatisches Polyketoncompound umfassend 90,0 bis(98,0{Gew.% aliphatisches Polyketon, sowie 2,0 bis 8,0 Gew.% ultrahochmolekulares Polyethylen, dadurch gekennzeichnet, dass der D50-Wert des Polyethylens unter 75 pm liegt. 2.

Der Begriff "Compound" wird erfindungsgemäß im herkömmlichen Sinne als Kunststoff verstanden, der mindestens zwei miteinander nicht blendbare Polymere enthält oder als Kunststoff, der zusätzlich zu dem Polymer Füllstoffe, Verstärkungsstoffe oder andere Additive, beispielsweise tribologische Additive, enthält, die mit dem Polymer ein mehrphasiges System bilden. Das erfindungsgemäße Polyketoncompound enthält mit dem aliphatischen Polyketon und dem ultrahochmolekularen Polyethylen dabei mindestens zwei miteinander nicht blendbare Polymere.

Im Unterschied dazu weisen Blends eine Kombination aus zwei oder mehr Polymeren auf, die physikalisch gemischt (verblendet) werden. Homogene Blends weisen eine einzige Phase auf. Heterogene Blends weisen mindestens zwei Phasen auf. Homogene Blends zeigen nicht mehr die Eigenschaften der separaten Polymere, sondern weisen eigene, neue Eigenschaften auf, die sich u.U. deutlich von denen der ursprünglichen Polymere unterscheiden können (siehe Kulshreshtha, A. K. (2002) "Handbuch zu Polymermischungen und Verbundstoffen (Vol.1)", iSmithers Rapra Publishing oder Sperling, L.H. (2005) "Einführung in die physikalische Polymerwissenschaft", John Wiley & Sons.).

Erfindungsgemäß wurde gefunden, dass durch das Einmischen von 2,0 bis 8,0 Gew.%, ultrahochmolekularem Polyethylen in aliphatische Polyketone deren tribologische Eigenschaften in puncto Reibung und Verschleiß so verbessert werden können, dass sie mit denen der kommerziell erhältlichen, reibungsmodifizierten Polyketoncompounds vergleichbar sind, aber gleichzeitig eine deutlich bessere Bindenahtfestigkeit und einen hohen Extrusionswiderstand aufweisen.

Wie oben erläutert, ist die gegenüber den kommerziell erhältlichen, mit PTFE reibungsmodifizierten, aliphatischen Polyketoncompounds, verbesserte Bindenahtfestigkeit des erfindungsgemäßen Polyketoncompounds von großem Vorteil, da sie es beispielsweise ermöglicht, Dichtungen mittels einer modernen und kostengünstigen Variante des Spritzgussverfahrens, bei der nur ein Anspritzpunkt verwendet wird, herzustellen. Die dabei erhaltenen Produkte zeichnen sich durch einen hohen Extrusionswiderstand aus. Dieser ist insbesondere für dynamische Dichtungsanwendungen von Vorteil, da sich ansonsten über die Einsatzdauer der Dichtungen Extrusionsfahnen bilden und dadurch Leckage bzw. vorzeitiges Versagen der Dichtung entstehen können. Gleichzeitig besitzen die erfindungsgemäßen, aliphatischen Polyketoncompounds Gleit- und Reibeigenschaften, die sich mit denen von PTFE, PTFE/Bronze-Compounds oder denen der kommerziell erhältlichen, mit PTFE reibungsmodifizierten Polyketoncompounds annährend vergleichen lassen. Überraschend wurde gefunden, dass 2,0 bis 8,0 Gew.% und insbesondere von 5,0 bis 7,5 Gew.% des ultrahochmolekularen Polyethylens jeweils bezogen auf das Gesamtgewicht des Polyketoncompounds, bereits ausreichen, um mit den Gleit- und Reibeigenschaften eines mit 20 Gew.% PTFE gefüllten aliphatischen Polyketons mitzuhalten. Weiterhin überraschend war, dass das erfindungsgemäße, aliphatische Polyketoncompound bei Deformationsbelastung, wie sie beispielweise beim Einbau einer steifen Kolbendichtung in einen Kolbenraum mittels einer Montagezange entsteht, nicht bricht, während baugleiche Dichtungen aus einem kommerziellen, mit 20 Gew.% PTFE modifizierten Polyketoncompound in 75 bis 90% der Einbauversuche an der Bindenaht brechen. Die verbesserte Bindenahtfestigkeit kann vermutlich durch den um 5 bis 19,5 Gew.%, bevorzugt 12 bis 18 Gew.% und insbesondere 12,5 bis 15 Gew.% geringeren Anteil an tribologischem Additiv erklärt werden. Es wird vermutet, dass beim Spritzgießen von Dichtungen mit nur einem Anspritzpunkt die eher apolaren tribologischen Additive während des Einspritzvorgangs an die Grenzfläche zwischen polarem Polyketon und Werkzeugwandung wandern. Im Bereich der Bindenaht, wo die beiden Fließfronten zusammentreffen, befindet sich daher eine besonders hohe Konzentration dieser Additive, was bei den kommerziellen, mit 20 Gew.% PTFE modifizierten Polyketoncompounds zu Haftungsproblemen und damit zu späteren Bindenahtbrüchen führt. Die erfindungsgemäßen Polyketoncompounds, die weniger als 15 Gew.% ultrahochmolekulares Polyethylen aufweisen, zeigen dieses Problem aufgrund des geringeren Additivanteils nicht.

Mithin weist das erfindungsgemäße aliphatische Polyketon in einer bevorzugten Ausführungsform der Erfindung einen Gesamtanteil an tribologischen Additiven, d.h. an ultrahochmolekularem Polyethylen und gegebenenfalls vorhandenen weiteren tribologischen Additiven, wie beispielsweise Silikonöle, PTFE-Pulver, Graphit, Molybdänsulfid, Bornitrid von weniger als 20 Gew.%, vorzugsweise von weniger als 5 Gew.% auf und insbesondere von weniger als 2,5 Gew.%. Nichtsdestotrotz können die oben genannten Additive vorhanden sein, beispielsweise in Mengen von 0,1 Gew.% bis 19,5 Gew.%.

Unter ultrahochmolekularem Polyethylen, oft mit UHMWPE für ultra-highmolecular-weight polyethylene abgekürzt, ist erfindungsgemäß Polyethylen mit einem Molekulargewicht von über 1,0 Million g/mol, vorzugsweise von 3,0 bis 7,0 Millionen g/mol und insbesondere von 3,0 bis 5,0 Millionen g/mol, gemessen mittels Ubbelohde-Viskosimetrie (verdünnte Lösung in Decahydronaphthalin bei 140 °C), zu verstehen. Aufgrund dieses hohen Molekulargewichts ist ultrahochmolekulares Polyethylen nicht schmelzbar. Dies ist vorteilhaft gegenüber schmelzbaren Kunststoffen, wie beispielsweise LD-PE oder HD-PE, da UHMWPE beim Eincompoundieren in eine aliphatische Polyketonschmelze selbst nicht aufschmilzt, sondern weiterhin in Form fester Partikel in der Polymermatrix vorliegt. Die UHMWPE-Partikel sind apolar, deshalb mit der polaren, aliphatischen Polyketonmatrix unverträglich und reichern sich daher an den Grenzflächen an. Dadurch verfügen die Polyketoncompounds an ihrer Oberfläche über verschleißfeste Partikel, die zum einen den Reibwiderstand und zum anderen den Materialabrieb reduzieren.

Im Unterschied zum UHMWPE sind LD-PE und HD-PE schmelzbare Polyethylene mit Schmelzbereichen um etwa 110 °C bzw. um etwa 135 °C, die beim Einmischen in eine aliphatische Polyketonschmelze vollständig aufschmelzen, in der Polymermatrix verteilt werden und dabei einen Blend ausbilden (so z.B. beschrieben in DE 695 13 864 T2, WO 96/06889). Dabei liegen keine diskreten PE-Partikel im fertigen Materialblend mehr vor, so dass die im vorigen Abschnitt durch die festen UHMWPE-Partikel genannten Vorteile nicht erzielt werden können.

Weiterhin weist UHMWPE aufgrund des deutlich höheren Molekulargewichts und der damit verbundenen höheren intermolekularen Wechselwirkungen eine deutlich bessere Verschleißfestigkeit und Schlagzähigkeit als LD-PE und HD-PE auf.

Ultrahochmolekulares Polyethylen kann aus monomerem Ethylen durch Metallocen-katalysierte Synthese gewonnen werden, wobei typischerweise polymere Ketten bestehend aus 100.000 bis 250.000 monomeren Einheiten entstehen. Mithin ist erfindungsgemäß ultrahochmolekulares Polyethylen bevorzugt, welches polymere Ketten bestehend aus 100.000 bis 250.000 monomeren Einheiten aufweist.

Vorzugsweise liegt die durchschnittliche Korngröße des ultrahochmolekularen Polyethylens im Bereich 20 µm bis 50 µm und insbesondere bei 38 µm. In einer weiteren bevorzugten Ausführungsform sind die Partikel des ultrahochmolekularen Polyethylens feiner als 75 µm. So liegt der D50-Wert des Polyethylens unter 75 µm.

Der D95 kann auch vorzugsweise unter 75 z µm liegen. Die spezifische Dichte des ultrahochmolekularen Polyethylens beträgt vorzugsweise 0,93 bis 0,94 g/cm³. Die Schüttdichte beträgt vorzugsweise 0,3 bis 0,6 g/cm³ und noch bevorzugter 0,32 bis 0,5 g/cm³. Das Molgewicht beträgt vorzugsweise 3,0 bis 7,0 Millionen g/mol und noch bevorzugter 3,0 bis 5,0 Millionen g/mol.

Erfindungsgemäß sind aliphatisches Polyketon und ultrahochmolekulares Polyethylen die Hauptbestandteile des erfindungsgemäßen aliphatischen Polyketoncompounds. Dabei beträgt der Anteil an aliphatischem Polyketon im Polyketoncompound erfindungsgemäß 90,0 bis 98,0 Gew.%, noch bevorzugter 92,0 bis 98,0 Gew.% und insbesondere von 92,5 bis 95,0 Gew.%, jeweils bezogen auf das Gesamtgewicht des Polyketoncompounds. Ferner beträgt der Anteil an ultrahochmolekularem Polyethylen im Polyketoncompound erfindungsgemäß von 2,0 bis 8,0 Gew.% und insbesondere von 5,0 bis 7,5 Gew.%, jeweils bezogen auf das Gesamtgewicht des Polyketoncompounds.

In einer bevorzugten Ausführungsform der Erfindung weist das aliphatische Polyketon einen Anteil an weiteren tribologischen Additiven, beispielsweise an Silikonölen von 0,1 Gew.% bis 2,0 Gew.%, insbesondere von 0,5 Gew.% bis 1,5 Gew.% auf.

in einer bevorzugten Ausführungsform der Erfindung weist das aliphatische Polyketon einen Schmelzpunkt, gemessen nach der Methode DIN EN 11357-1 von 210 bis 230 °C und insbesondere von 220 bis 222 °C auf. Der Glasübergangspunkt liegt im Bereich von 5 °C bis 20 °C, bevorzugt von 10 °C bis 15 °C und insbesondere von 11 °C bis 13 °C. Die Dichte des aliphatischen Polyketons liegt, gemessen nach der Methode ISO 1183, vorzugsweise im Bereich von 1,1 bis 1,3 g/cm³ und insbesondere bei 1,24 g/cm³. Die Feuchtigkeitsaufnahme des aliphatischen Polyketons beträgt, gemessen nach der Methode ISO 1110, von 0,3 bis 1,2 % und insbesondere von 0,8 bis 0,9 %, bei 70 °C und 62 % r.F. Sein MVR liegt, gemessen nach der Methode ISO 1133, vorzugsweise im Bereich von 2 bis 80 cm³/10 min und insbesondere im Bereich von 6 bis 60 cm³/10 min bei 240 °C und 2,16 kg Prüfgewicht.

In einer bevorzugten Ausführungsform der Erfindung ist das aliphatische Polyketon ein Terpolymer, vorzugsweise hergestellt aus Ethylen, Kohlenmonoxid und einem Alken mit 3 bis 5 Kohlenstoffatomen, vorzugsweise Propylen und/oder Butylen, insbesondere Propylen. Die Anordnung von Kohlenmonoxid und Olefin in der polymeren Kette erfolgt hierbei vorzugsweise streng alternierend.

In einer bevorzugten Ausführungsform der Erfindung besitzt das aliphatische Polyketon einen Molmassenmittelwert Mₙ (Zahlenmittel der Molmasse) zwischen 60000 und 100000 und/oder M_{w} (Massenmittel der Molmasse) zwischen 132000 und 320000. Der Polydispersitätsindex liegt dabei vorzugsweise zwischen 2,2 und 3,2.

Das erfindungsgemäße Polyketoncompound kann Silikonöl und andere flüssige oder feste Schmierstoffe enthalten. Ferner können weitere gängige Polymeradditive wie u.a. Alterungsschutzmittel, Füllstoffe, Flammschutzmittel und Pigmente sowie andere polymere Materialien enthalten sein, um die Eigenschaften der Zusammensetzung zu verbessern oder anderweitig zu verändern. Der Gehalt an flüssigen Schmierstoffen, wie z.B. Silikonölen, beträgt vorzugsweise 0,0 bis 2,0 Gew.% und besonders bevorzugt 0,0 bis 1,5 Gew.% und insbesondere 0,0 bis 1,0 Gew.%.

In einer bevorzugten Ausführungsform der Erfindung weist das aliphatische Polyketoncompound einen Reibungskoeffizienten µ, gemessen auf einem Lewis-Prüfstand bei einer Geschwindigkeit von v = 0,84 m/s, einem Druck von p = 0,84 MPa und im ungeschmierten Zustand, von 0,1 bis 0,4, noch bevorzugter von 0,1 bis 0,3 und insbesondere von 0,1 bis 0,25 auf. Weiterhin weist das aliphatische Polyketoncompound in einer bevorzugten Ausführungsform der Erfindung einen durchschnittlichen Verschleißkoeffizienten, gemessen auf einem Lewis-Prüfstand bei einer Geschwindigkeit von v = 0,84 m/s, einem Druck von p = 0,84 MPa und im ungeschmierten Zustand, von 1 *10⁻⁷ bis 1 *10⁻⁴ mm³/Nm und noch bevorzugter von 1 *10⁻⁷ bis 1 *10⁻⁵ mm³/Nm auf.

Darüber hinaus weist das erfindungsgemäße aliphatische Polyketoncompound vorzugsweise einen Zug-E-Modul, gemessen nach DIN EN ISO 527-2/1A/50, von 1600 MPa bis 1850 MPa, eine Zugfestigkeit, gemessen nach DIN EN ISO 527-2/1A/50, von 55 MPa bis 65 MPa und/oder eine Bruchdehnung, gemessen nach DIN EN ISO 527-2/1A/50, von 20 % bis 40 % auf.

Weiterhin weist das erfindungsgemäße aliphatische Polyketoncompound in einem wie in Beispiel 2 beschriebenen tribologischen Versuch, vorzugsweise einen Reibungskoeffizienten von µ = 0,38 bis 0,42 über die Gesamtdauer des Versuchs, einen Reibungskoeffizienten von µ = 0,38 bis 0,40 über den "steady state", einen Verschleißkoeffizienten von 10 *10-⁶ bis 20 *10⁻⁶ über die Gesamtdauer des Versuchs und/oder einen Verschleißkoeffizienten von 2 *10-⁶ bis 5 *10-⁶ über den "steady state" auf.

Ein weiterer Gegenstand der vorliegenden Erfindung ist ein Verfahren zur Herstellung des aliphatischen Polyketoncompounds umfassend das Vermengen von 90 bis 98.0 Gew.% aliphatischem Polyketon mit 2,0 bis 8,0

Gew.% ultrahochmolekularem Polyethylen, noch bevorzugter 98,0 bis 92,0 Gew.% aliphatischem Polyketon mit 2,0 bis 8,0 Gew.% ultrahochmolekularem Polyethylen und insbesondere 95,0 bis 92,5 Gew.% aliphatischem Polyketon mit 5,0 bis 7,5 Gew.% ultrahochmolekularem Polyethylen. Dabei beziehen sich die Gewichtsangaben auf das Gesamtgewicht des aliphatischen Polyketoncompounds.

Das Vermengen der Komponenten des aliphatischen Polyketoncompounds erfolgt bevorzugt mittels Extrusionstechnologie. Als Extruder werden hierbei vorzugsweise gleichläufige Doppelschneckenextruder, aber auch gegenläufige Doppelschneckenextruder, Planetwalzenextruder und Ko-Kneter verwendet. Einschneckenextruder sind eher zur Förderung und nicht zur Compoundierung geeignet und damit für die Herstellung des erfindungsgemäßen aliphatischen Polyketoncompounds weniger geeignet. in einer Ausführungsform wird aliphatisches Polyketon bei 70 °C bis 90°C über einen Zeitraum von vier Stunden vorgetrocknet und anschließend mittels eines Dosierers, bevorzugt eines gravimetrischen Dosierers, in einen Doppelschneckenextruder dosiert. Die Temperatur der Einzugszone liegt dabei bevorzugt im Bereich von 50 °C bis 100 °C während die Temperatur der Extruderzonen bevorzugt 225 °C bis 254 °C beträgt. Das ultrahochmolekulare Polyethylen wird vorzugsweise über einen weiteren Dosierer, bevorzugt einen gravimetrischen Dosierer, der Polymerschmelze zugeführt. Nach Austritt aus der Extruderdüse wird der Strang vorzugsweise auf ein Förderband abgelegt und mittels Wasser und/oder Luft gekühlt, bevor er in einem nachgeschalteten Granulator zerkleinert wird. Es ist vorteilhaft, dass hergestellte Granulat zu trocknen, um die durch den Kühlungsprozess eingebrachte Feuchtigkeit zu entfernen.

Erfindungsgemäß werden aliphatisches Polyketon und ultrahochmolekulares Polyethylen in einem solchen Mengenverhältnis miteinander und den gegebenenfalls vorhandenen weiteren Komponenten vermengt, dass sie die Hauptbestandteile des aliphatischen Polyketoncompounds bilden. Das Polyketon wird dem Compound in einer Menge von 90 bis 98,0 Gew.%, noch bevorzugter von 98,0 bis 92,0 Gew.% und insbesondere von 95,0 bis 92,5 Gew.% zugeführt. Ferner wird das ultrahochmolekulare Polyethylen dem Compound in einer Menge von 2,0 bis 8,0 Gew.% und insbesondere von 5,0 bis 7,5 Gew.% zugeführt. Mengen unterhalb von 10 Gew.% ultrahochmolekulares Polyethylen sind vorteilhaft, da so eine Verstopfung der Extruderdüsen besonders einfach verhindert werden kann.

Ultrahochmolekulares Polyethylen neigt nämlich dazu zu agglommerieren, sich im Bereich der Extruderdüse anzusammeln und diese zu verstopfen. Die Herstellung von Compounds mit mehr als 10 Gew.% ultrahochmolekularem Polyethylen kann jedoch ebenfalls mit dem oben beschriebenen Verfahren durchgeführt werden, insbesondere in kleinen Batchen, jedoch ist es aufgrund der Agglomeration von UHMWPE und der damit verbundenen Verstopfung der Extruderdüse vorteilhaft besondere technische Maßnahmen für eine kontinuierliche Fertigung zu ergreifen.

Das erfindungsgemäße aliphatische Polyketoncompound kann durch konventionelle, formgebende Verfahren wie beispielsweise Extrusion, Formpressen und Spritzguss zu verschiedenen Erzeugnissen verarbeitet werden, die sich besonders für Anwendungen eignen, die gute tribologische Eigenschaften erfordern.

Ein weiterer Gegenstand der vorliegenden Erfindung sind Formkörper, vorzugsweise rotationssymmetrische Formkörper, insbesondere Dichtungen wie Stangen- und/oder Kolbendichtungen, Konstruktionsteile (mit und/ohne Dichtfunktion), Abstreifelemente, Kupplungselemente, Backringe (Antiextrusionsringe), Verschleißbänder und/oder Führungen, die das erfindungsgemäße Polyketoncompound enthalten.

In einer bevorzugten Ausführungsform weist der Formkörper in einem Biegeversuch, wie in Beispiel 2 beschrieben, eine Bindenahtfestigkeit von größer 120 N auf. Weiterhin bricht der Formkörper in einem Biegeversuch bei maximalem Traversenweg (43,31 mm), wie in Beispiel 2 beschrieben, vorzugsweise nicht an der Bindenaht.

Besonders geeignet ist das erfindungsgemäße aliphatische Polyketoncompound für Formkörper, die mittels Spritzgussverfahren, insbesondere mittels Spritzgussverfahren, die nur einen Anspritzpunkt, beispielsweise Punkt- oder Tunnel-Anschnitte, verwenden, hergestellt werden.

Ferner betrifft die Erfindung die Verwendung des erfindungsgemäßen aliphatischen Polyketoncompounds zur Herstellung von Formkörpern, vorzugsweise rotationssymmetrischen Formkörpern, insbesondere Dichtungen wie Stangen- und/oder Kolbendichtungen, Konstruktionsteilen (mit und/ohne Dichtfunktion), Abstreifelementen, Kupplungselementen, Zahnrädern, Gleitlagern, Backringen, insbesondere Antiextrusionsringen, Verschleißbändern und/oder Führungen.

Die Erfindung wird nachfolgend durch Beispiele näher erläutert.

### Beispiel 1: Herstellung eines erfindungsgemäßen Polyketoncompounds

Die Herstellung eines erfindungsgemäßen tribologisch modifizierten Polyketoncompounds erfolgte auf einem 27 mm-Doppelschneckenextruder der Firma Leistritz vom Typ ZSE 27 iMAXX (Schneckendurchmesser: 28,3 mm, Gangtiefe: 5,6 mm (ohne Spiel), Dₐ/Dᵢ = 1,66, maximales Drehmoment: 256 Nm, Schneckendrehzahl: 600-1200 U/min), ausgerüstet mit einem Feststoffdosierer der Firma SCHOLZ Dosiertechnik GmbH vom Typ BASIC 401 zur Dosierung des aliphatischen Polyketons, einem Feststoffdosierer der Firma SCHOLZ Dosiertechnik GmbH vom Typ BASIC 300 zur Dosierung des ultrahochmolekularen Polyethylens, einem Förderband zur Strangablage, einer Wasserkühlung zur Kühlung des abgelegten Polymerstrangs sowie einem nachgeschalteten Granulator der Firma Maag Automatik GmbH vom Typ PRIMO 60E zur Zerkleinerung des abgelegten Strangs.

Als aliphatisches Polyketon wurde AKROTEK^{®} PK-VM natur (4774) von der Firma AKRO-PLASTIC GmbH verwendet. AKROTEK^{®} PK-VM natur (4774) ist eine unverstärkte Polyketon-Type mit hoher Fließfähigkeit. Ihr Schmelzpunkt beträgt, gemessen nach der Methode DIN EN 11357-1, 220 °C, ihre Dichte liegt, gemessen nach der Methode ISO 1183, bei 1,24 g/cm³, ihre Feuchtigkeitsaufnahme beträgt, gemessen nach der Methode ISO 1110, bei 70 °C und 62 % r.F. zwischen 0,8 und 0,9 % und ihr MVR liegt, gemessen nach der Methode ISO 1133, bei 60 cm³/10 min.

Als ultrahochmolekulares Polyethylen wurde INHANCE UH-1700 von der Firma Nordmann Rassmann verwendet. Die durchschnittliche Korngröße der UHMWPE-Partikel liegt bei 38 µm und alle Partikel sind feiner als 75 µm. INHANCE UH-1700 ist eine UHMWPE-Type mit oberflächenbehandelten Partikeln, um eine bessere Dispergierbarkeit und eine bessere Haftung der selbigen im umgebenden Polymer zu ermöglichen. Das Material hat eine spezifische Dichte von 0,93 bis 0,94 g/cm³, eine Schüttdichte von 0,32 bis 0,5 g/cm³ sowie ein Molgewicht von 3,0 bis 5,0 Millionen g/mol.

Das aliphatische Polyketon wurde mittels des Feststoffdosierers vom Typ BASIC 401 in die Einfüllzone des Extruders gefördert. Die Temperatur der Einfüllzone war auf 50 °C eingestellt. Die zwölf Heizzonen des Extruders waren auf Temperaturen im Bereich von 230 °C bis 245 °C eingestellt. Die Temperatur der Düse betrug 230 °C. Die gemessene Massetemperatur des Polymers lag bei 238 °C. Der Gesamtdurchsatz an Material betrug 19,97 kg/h. Der Durchsatz an AKROTEK^{®} PK-VM lag bei 18,97 kg/h, der Durchsatz an Inhance UH-1700 bei 1,0 kg/h. Das fertige Compound wurde über eine Einlochdüse auf das Förderband ausgetragen, mit Sprühwasser abgekühlt und dem Granulator zugeführt. Da das Granulat durch die Kühlung mit Wasser noch viel anhaftende Restfeuchte enthält, wurde es bei 80 °C für 30 bis 45 Minuten getrocknet.

Vor dem Verspritzen des Compounds zu Prüfkörpern wurde das Granulat erneut für vier Stunden bei 80 °C getrocknet.

### Beispiel 2: Mechanische und tribologische Prüfungen des Polyketoncompounds aus Beispiel 1

Herstellung von Prüfkörpern für die mechanischen und tribologischen Prüfungen erfolgte auf einer Spritzgussmaschine der Firma Arburg GmbH & Co. KG vom Typ 320C 600-100 Allrounder. Als Spritzgussform wurde ein AIM^{™} Quick Change Mold von der Firma Axxicon Moulds verwendet. Es wurden S1A-Zugstäbe für mechanische Prüfungen und Lewis-Prüfkörper für tribologische Test hergestellt.

Mechanische Prüfungen ergaben für das Compound einen Zug-E-Modul, gemessen nach DIN EN ISO 527-2/1A/50, von 1725 ± 10 MPa, eine Zugfestigkeit, gemessen nach DIN EN ISO 527-2/1A/50, von 58,7 ± 0,2 MPa und eine Bruchdehnung, gemessen nach DIN EN ISO 527-2/1A/50, von 28,2 ± 7,1 %.

Die tribologischen Prüfungen wurden auf einem Lewis-Prüfstand der Firma Lewis Research Inc. vom Typ LRI-1a durchgeführt. Als Gegenlauffläche diente ein D2 Stahl/52100 der chemischen Zusammensetzung 100Cr6. Die Prüfung wurde im ungeschmierten Zustand durchgeführt. Die Geschwindigkeit betrugt v = 0,84 m/s und der Anpressdruck p lag bei 0,84 MPa. Beide Parameter wurden so gewählt, dass die Temperatur im Dauerlaufzustand bei zwischen 54 °C und 58 °C lag. Das Compound zeigte unter diesen Prüfbedingungen einen Reibungskoeffizienten von µ = 0,275 über die Gesamtdauer des Versuchs, einen Reibungskoeffizienten von µ = 0,269 über den "steady state", einen Verschleißkoeffizienten von 6,556 *10⁻⁶ über die Gesamtdauer des Versuchs und einen Verschleißkoeffizienten von 1,862 *10⁻⁶ über den "steady state". Vergleichend zum erfindungsgemäßen Compound wurden das PTFE-modifizierte AKROTEK^{®} PK-VM TM und das unmodifizierte AKROTEK^{®} PK-VM gemessen. Das unmodifizierte AKROTEK^{®} PK-VM zeigte unter analogen Versuchsbedingungen einen Reibungskoeffizienten von µ = 0,412 über die Gesamtdauer des Versuchs, einen Reibungskoeffizienten von µ = 0,390 über den "steady state", einen Verschleißkoeffizienten von 15,641 *10-⁶ über die Gesamtdauer des Versuchs und einen Verschleißkoeffizienten von 3,814 *10⁻⁶ über den "steady state". Das tribologisch modifizierte AKROTEK^{®} PK-VM TM zeigte unter analogen Versuchsbedingungen einen Reibungskoeffizienten von µ = 0,221 über die Gesamtdauer des Versuchs, einen Reibungskoeffizienten von µ = 0,214 über den "steady state", einen Verschleißkoeffizienten von 2,087 *10-⁶ über die Gesamtdauer des Versuchs und einen Verschleißkoeffizienten von 1,670 *10-⁶ über den "steady state". Es zeigt sich, dass der PTFE-modifizierte Benchmark AKROTEK^{®} PK-VM TM - obwohl er mit etwa 20 Gew.% PTFE deutlich mehr tribologische Additive als das erfindungsgemäße Compound (5 Gew.% an tribologischem Additiv) enthält, nur minimal besser abschneidet.

Zur Bewertung der Bindenahtfestigkeit wurde aus dem in Beispiel 1 hergestellten Compound fünf Stangendichtungen gemäß der in Figur 1 gezeigten Geometrie (1: Stangendurchmesser von 50 mm) im Spritzgussverfahren mit nur einem Anspritzpunkt hergestellt und anschließend einem Biegeversuch unterzogen. Die Dichtungen wurden in Versuchsapparatur jeweils so angeordnet, dass die Bindenaht sowie der gegenüberliegende Anspritzpunkt horizontal ausgerichtet waren und die Druckfinne (Durchmesser des Stempels: 25 mm) in einem Winkel von 90° zu Bindenaht und Anspritzpunkt auf die Dichtung drückte. Es wurde mit einem Auflagepunkt gearbeitet. Die Druckfinne wurde mit einer Vorkraft von 5 N belegt und anschließend mit 5 mm/Minute gefahren. Der maximale Traversenweg lag bei 43,3 cm. Das in Beispiel 1 hergestellte, tribologisch modifizierte Polyketoncompound zeigte bei diesem Versuchsaufbau keinen Bruch an der Bindenaht. Bei allen fünf getesteten Stangendichtungen wurde die Druckfinne bis an den maximalen Traversenweg gefahren ohne dass eine Dichtung brach (siehe Tabelle 1).

**Tabelle 1: Ergebnisse der Biegeprüfungen an Stangendichtungen, hergestellt aus dem in Beispiel 1 beschriebenen erfindungsgemäßen Polyketoncompound.**

| Nr.: | F1mm: | F2mm: | F3mm: | F4mm: | Fmax: | Weg max: | Bemerkung: |
|---|---|---|---|---|---|---|---|
| 1 | 12,31 N | 19,12 N | 25,25 N | 30,65 N | 124,8 N | 42,97 mm | Ring nicht gebrochen |
| 2 | 12,35 N | 19,31 N | 25,57 N | 31,06 N | 113,2 N | 43,31 mm | Ring nicht gebrochen |
| 3 | 12,45 N | 19,37 N | 25,59 N | 31,03 N | 121,7 N | 43,30 mm | Ring nicht gebrochen |
| 4 | 12,39 N | 19,32 N | 25,55 N | 31,00 N | 114,9 N | 32,29 mm | Ring nicht gebrochen |
| 5 | 12,29 N | 19,20 N | 25,41 N | 30,87 N | 113,3 N | 43,29 mm | Ring nicht gebrochen |

Im Vergleich zum erfindungsgemäßen Polyketoncompound wurden Stangendichtungen aus einem kommerziell erhältlichen, mit ca. 20 Gew.% PTFE reibungsmodifizierten Polyketoncompound unter analogen Versuchsbedingungen getestet. Von vier getesteten Stangendichtungen brachen drei nach einem Traversenweg von 32,3 bis 35,4 mm und einer Druckkraft von 96,7 bis 105,4 N (siehe Tabelle 2).

**Tabelle 2: Ergebnisse der Biegeprüfungen an Stangendichtungen, hergestellt aus einem kommerziell erhältlichen, mit dem ca. 20 Gew.% modifizierten Polyketoncompound AKROTEK^{®} PK-VM TM.**

| Nr.: | F1mm: | F2mm: | F3mm: | F4mm: | Fmax: | Weg max: | Bemerkung: |
|---|---|---|---|---|---|---|---|
| 1 | 12,47 N | 19,20 N | 25,20 N | 30,36 N | 96,7 N | 32,34 mm | Ring gebrochen |
| 2 | 12,30 N | 19,04 N | 25,03 N | 30,25 N | 112,8 N | 43,16 mm | Ring nicht gebrochen |
| 3 | 12,42 N | 19,21 N | 25,22 N | 30,45 N | 105,4 N | 35,36 mm | Ring gebrochen |
| 4 | 9,60 N | 16,74 N | 23,13 N | 28,71 N | 103,3 N | 34,20 mm | Ring gebrochen |

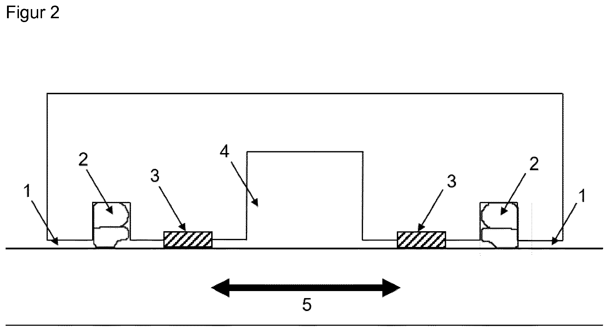

Weiterhin wurden die Stangendichtungen aus dem erfindungsgemäßen Compound mehrfach auf einem Hydraulikprüfstand unter anwendungsnahen Bedingungen gegen den aktuellen Benchmark, eine Stangendichtung aus einem PTFE/Bronze-Compound getestet. Ein Schema des Prüfstandes ist in Figur 2 dargestellt. Der Prüfstand weist folgende Komponenten auf: Extrusionsspalt (1), Testdichtung (2), Führung (3), Druckkammer (4). Die Stangenbewegung (5) verläuft horizontal. Die Einstellungen des Prüfstand waren wie folgt:

| | |
|---|---|
| Hub | 400 mm |
| Geschwindigkeit | 0,3 m/s |
| Druck | 400 bar (40 MPa) |
| Temperatur | 100 °C |
| Prüfdauer | 50.000 Doppelhübe |
| Öl | Shell Tellus 46 |

Bewertet wurden Leckage und Extrusionsstabilität im Dauereinsatz. Hierbei zeigte sich, dass das PTFE/Bronze-Compound nach etwa 40000 Hüben aufgrund von Spaltextrusion geschädigt wird und sich daraufhin die Leckage bis zum Ende der Laufzeit nach 50000 Hüben von 20 Tropfen auf 90 Tropfen mehr als vervierfacht. Die Dichtungen aus dem erfindungsgemäßen Polyketoncompound, hergestellt nach der Beschreibung aus Beispiel 1, ist über die volle Laufzeit von 50000 Hüben extrusionsstabil (bis zum Ende etwa 20 Tropfen Leckage).

## Patentansprüche

1. Aliphatisches Polyketoncompound umfassend 90,0 bis 98,0 Gew.% aliphatisches Polyketon sowie 2.0 bis 8,0 Gew.% ultrahochmolekulares Polyethylen,
**dadurch gekennzeichnet, dass** der D50-Wert des Polyethylens unter 75 µm liegt.

2. Aliphatisches Polyketoncompound nach Anspruch 1, **dadurch gekennzeichnet, dass** der Anteil des ultrahochmolekularen Polyethylens von 5,0 bis 7,5 Gew.% beträgt.

3. Aliphatisches Polyketoncompound nach Anspruch 1 oder 2, **dadurch gekennzeichnet, dass** das ultrahochmolekulare Polyethylen ein Molekulargewicht, gemessen mittels Ubbelohde-Viskosimetrie (verdünnte Lösung in Decahydronaphthalin bei 140 °C), von über 1,0 Million g/mol, vorzugsweise von 3,0 bis 7,0 Millionen g/mol aufweist.

4. Aliphatisches Polyketoncompound nach einem oder mehreren der vorangehenden Ansprüche, **dadurch gekennzeichnet, dass** das aliphatische Polyketon einen Schmelzpunkt, gemessen nach der Methode DIN EN 11357-1 von 210 bis 230 °C und/oder einen Glasübergangspunkt, gemessen nach der Methode DIN EN 11357-1 im Bereich von 5 °C bis 20 °C und/oder eine Dichte, gemessen nach der Methode ISO 1183 im Bereich von 1,1 bis 1,3 g/cm³ und insbesondere bei 1,24 g/cm³ und/oder eine Feuchtigkeitsaufnahme, gemessen nach der Methode ISO 1110, von 0,3 bis 1,2 % und/oder einen MVR, gemessen nach der Methode ISO 1133, im Bereich von 2 bis 80 cm³/10 min aufweist.

5. Aliphatisches Polyketoncompound nach einem oder mehreren der vorangehenden Ansprüche, **dadurch gekennzeichnet, dass** das aliphatische Polyketon ein Terpolymer ist.

6. Aliphatisches Polyketoncompound nach einem oder mehreren der vorangehenden Ansprüche, **dadurch gekennzeichnet, dass** das aliphatische Polyketon hergestellt ist aus Ethylen, Kohlenmonoxid und einem Alken mit 3 bis 5 Kohlenstoff-atomen, vorzugsweise Propylen.

7. Aliphatisches Polyketoncompound nach einem oder mehreren der vorangehenden Ansprüche, **dadurch gekennzeichnet, dass** bei seiner Herstellung die Anordnung von Kohlenmonoxid und Olefin in der polymeren Kette streng alternierend erfolgt.

8. Verfahren zur Herstellung eines aliphatischen Polyketoncompounds umfassend das Vermengen von 90,0 bis 98,0 Gew.% aliphatischem Polyketon mit 2,0 bis 8,0 Gew.% ultrahochmolekularem Polyethylen, er
**dadurch gekennzeichnet, dass** der D50-Wert des Polyethylens unter 75 µm liegt.

9. Formkörper, insbesondere Dichtungen, Abstreifelemente, Kupplungselemente, Backringe (Antiextrusionsringe), Verschleißbänder, Führungen und Konstruktionsteile, **dadurch gekennzeichnet, dass** die Formkörper ein aliphatisches Polyketoncompound nach einem oder mehreren der vorangehenden Ansprüche enthalten.

10. Formkörper nach Anspruch 9, **dadurch gekennzeichnet, dass** der Formkörper ein rotationssymmetrischer Formkörper ist.

11. Formkörper nach Anspruch 9 oder 10, **dadurch gekennzeichnet, dass** der Formkörper mittels Spritzgussverfahren, insbesondere mittels Spritzgussverfahren, die nur einen Anspritzpunkt verwenden, hergestellt wurde.

12. Verwendung eines aliphatischen Polyketoncompounds nach einem oder mehreren der Ansprüche 1 bis 7 zur Herstellung von Formkörpern, vorzugsweise von rotationssymmetrischen Formkörpern, insbesondere Dichtungen wie Stangen- und/oder Kolbendichtungen, Konstruktionsteilen (mit und/ohne Dichtfunktion), Abstreifelementen, Kupplungselementen, Zahnrädern, Gleitlagern, Backringen, insbesondere Antiextrusionsringen, Verschleißbändern und/oder Führungen.

13. Verwendung nach Anspruch 12, **dadurch gekennzeichnet, dass** ein Formkörper mittels Spritzgussverfahren, insbesondere mittels Spritzgussverfahren, die nur einen Anspritzpunkt verwenden, hergestellt wird.

## Claims

1. Aliphatic polyketone compound comprising 90.0 to 98.0% by weight aliphatic polyketone and 2.0 to 8.0% by weight ultra-high molecular weight polyethylene, **characterized in that** the D50 value of the polyethylene is below 75 µm.

2. Aliphatic polyketone compound according to Claim 1, **characterized in that** the proportion of the ultra-high molecular weight polyethylene is from 5.0 to 7.5% by weight.

3. Aliphatic polyketone compound according to Claim 1 or 2, **characterized in that** the ultra-high molecular weight polyethylene has a molecular weight, measured by Ubbelohde viscometry (diluted solution in decahydronaphthalene at 140°C), of above 1.0 million g/mol, preferably 3.0 to 7.0 million g/mol.

4. Aliphatic polyketone compound according to one or more of the preceding claims, **characterized in that** the aliphatic polyketone has a melting point, measured according to the method of DIN EN 11357-1, of 210 to 230°C and/or a glass transition temperature, measured according to the method of DIN EN 11357-1, in the range of 5°C to 20°C and/or a density, measured according to the method of ISO 1183, in the range of 1.1 to 1.3 g/cm³ and in particular of 1.24 g/cm³ and/or a moisture absorption, measured according to the method of ISO 1110, of 0.3 to 1.2% and/or a MVR, measured according to the method of ISO 1133, in the range of 2 to 80 cm³/10 min.

5. Aliphatic polyketone compound according to one or more of the preceding claims, **characterized in that** the aliphatic polyketone is a terpolymer.

6. Aliphatic polyketone compound according to one or more of the preceding claims, **characterized in that** the aliphatic polyketone is produced from ethylene, carbon monoxide and an alkene having 3 to 5 carbon atoms, preferably propylene.

7. Aliphatic polyketone compound according to one or more of the preceding claims, **characterized in that** during production thereof, the arrangement of carbon monoxide and olefin in the polymeric chain is strictly alternating.

8. Process for producing an aliphatic polyketone compound comprising the mixing of 90 to 98.0% by weight aliphatic polyketone with 2.0 to 8.0% by weight ultra-high molecular weight polyethylene, **characterized in that** the D50 value of the polyethylene is below 75 µm.

9. Mouldings, especially seals, wiper elements, coupling elements, backup rings (anti-extrusion rings), sealing belts, guides and structural parts, **characterized in that** the mouldings comprise an aliphatic polyketone compound according to one or more of the preceding claims.

10. Moulding according to Claim 9, **characterized in that** the moulding is a rotationally symmetrical moulding.

11. Moulding according to Claim 9 or 10, **characterized in that** the moulding has been produced by injection moulding processes, especially by injection moulding processes which use only one injection point.

12. Use of an aliphatic polyketone compound according to one or more of Claims 1 to 7 for producing mouldings, preferably rotationally symmetrical mouldings, especially seals such as rod seals and/or piston seals, structural parts (with and without sealing function), wiper elements, coupling elements, toothed wheels, sliding bearings, backup rings, especially anti-extrusion rings, wear bands and/or guides.

13. Use according to Claim 12, **characterized in that** a moulding is produced by injection moulding processes, especially by injection moulding processes which use only one injection point.

## Revendications

1. Composé de polycétone aliphatique comprenant 90,0 à 98,0% en poids de polycétone aliphatique ainsi que 2,0 à 8,0% en poids de polyéthylène à poids moléculaire ultra-élevé, **caractérisé en ce que** la valeur D50 du polyéthylène est inférieure à 75 µm.

2. Composé de polycétone aliphatique selon la revendication 1, **caractérisé en ce que** la proportion du polyéthylène à poids moléculaire ultra-élevé est de 5,0 à 7,5% en poids.

3. Composé de polycétone aliphatique selon la revendication 1 ou 2, **caractérisé en ce que** le polyéthylène à poids moléculaire ultra-élevé présente un poids moléculaire, mesuré par viscosimétrie d'Ubbelohde (solution diluée dans du décahydronaphtalène à 140°C), supérieur à 1,0 million de g/mole, de préférence de 3,0 à 7,0 millions de g/mole.

4. Composé de polycétone aliphatique selon l'une ou plusieurs des revendications précédentes, **caractérisé en ce que** la polycétone aliphatique présente un point de fusion, mesuré selon la méthode de la norme DIN EN 11.357-1, de 210 à 230°C et/ou une température de transition vitreuse, mesurée selon la méthode de la norme DIN EN 11357-1, dans la plage de 5°C à 20°C et/ou une densité, mesurée selon la méthode de la norme ISO 1183, dans la plage de 1,1 à 1,3 g/cm³ et en particulier de 1,24 g/cm³ et/ou une absorption d'humidité, mesurée selon la méthode de la norme ISO 1110, de 0,3 à 1,2% et/ou un indice de fluidité à chaud en volume, MVR, mesuré selon la méthode de la norme ISO 1133, dans la plage de 2 à 80 cm³/10 min.

5. Composé de polycétone aliphatique selon l'une ou plusieurs des revendications précédentes, **caractérisé en ce que** la polycétone aliphatique est un terpolymère.

6. Composé de polycétone aliphatique selon l'une ou plusieurs des revendications précédentes, **caractérisé en ce que** la polycétone aliphatique est préparée à partir d'éthylène, de monoxyde de carbone et d'un alcène comprenant 3 à 5 atomes de carbone, de préférence le propylène.

7. Composé de polycétone aliphatique selon l'une ou plusieurs des revendications précédentes, **caractérisé en ce que**, lors de sa préparation, l'agencement de monoxyde de carbone et d'oléfine dans la chaîne polymère s'effectue de manière strictement alternée.

8. Procédé pour la préparation d'un composé de polycétone aliphatique comprenant le mélange de 98,0 à 90,0% en poids de polycétone aliphatique avec 2,0 à 8,0% en poids de polyéthylène à poids moléculaire ultra-élevé, **caractérisé en ce que** la valeur D50 du polyéthylène est inférieure à 75 pm.

9. Corps moulés, en particulier joints d'étanchéité, éléments de raclage, éléments d'accouplement, bagues de cuisson (bagues d'anti-extrusion), courroies d'usure, de dispositifs de guidage et pièces de construction, **caractérisés en ce que** les corps moulés contiennent un composé de polycétone aliphatique selon l'une ou plusieurs des revendications précédentes.

10. Corps moulé selon la revendication 1, **caractérisé en ce que** le corps moulé est un corps moulé à symétrie de rotation.

11. Corps moulé selon la revendication 9 ou 10, **caractérisé en ce que** le corps moulé a été fabriqué par des procédés de moulage par injection, en particulier par des procédés de moulage par injection qui n'utilisent qu'un seul point d'injection.

12. Utilisation d'un composé de polycétone aliphatique selon l'une ou plusieurs des revendications 1 à 7 pour la fabrication de corps moulés, de préférence de corps moulés à symétrie de rotation, en particulier de joints d'étanchéité, tels que les joints d'étanchéité pour des tiges et/ou des pistons, de pièces de construction (avec et/ou sans fonction d'étanchéité), d'éléments de raclage, d'éléments d'accouplement, de roues dentées, de paliers lisses, de bagues de cuisson, en particulier de bagues d'anti-extrusion, de courroies d'usure et/ou de dispositifs de guidage.

13. Utilisation selon la revendication 12, **caractérisée en ce que** le corps moulé est fabriqué par des procédés de moulage par injection, en particulier par des procédés de moulage par injection qui n'utilisent qu'un seul point d'injection.
